**Europäisches Patentamt**

**European Patent Office**

**Office européen des brevets**

(11) Publication number: **0 269 732**
**B1**

(12) **EUROPEAN PATENT SPECIFICATION**

(45) Date of publication of patent specification: **22.08.90**

(21) Application number: **86903602.0**

(22) Date of filing: **13.06.86**

(51) Int. Cl.⁵: **B 62 B 3/04, B 66 F 9/14**

(86) International application number:
**PCT/JP86/00301**

(87) International publication number:
**WO 87/07573 17.12.87 Gazette 87/28**

(54) **APPARATUS FOR TRANSPORTING ELONGATED ARTICLES.**

(43) Date of publication of application:
**08.06.88 Bulletin 88/23**

(45) Publication of the grant of the patent:
**22.08.90 Bulletin 90/34**

(84) Designated Contracting States:
**DE GB**

(56) References cited:
**DE-A-2 926 077**
**JP-U-5 869 570**
**US-A-2 268 793**

(73) Proprietor: **OSAKA TAIYU COMPANY, LTD.**
**10-1, Ina 6-chome**
**Minoo-shi Osaka (JP)**

(72) Inventor: **TABAYASHI, Yoshikazu**
**B11-505, 1, Takemidai 4-chome**
**Suita-shi Osaka 565 (JP)**

(74) Representative: **TER MEER - MÜLLER -**
**STEINMEISTER & PARTNER**
**Mauerkircherstrasse 45**
**D-8000 München 80 (DE)**

## Description

### Technical Field

The present invention relates to a carrier which is movable in two directions, i.e. forward and laterally, while supporting thereon an elongated article such as a beam for weaving machines, roll for industrial machines or the like.

### Background Art

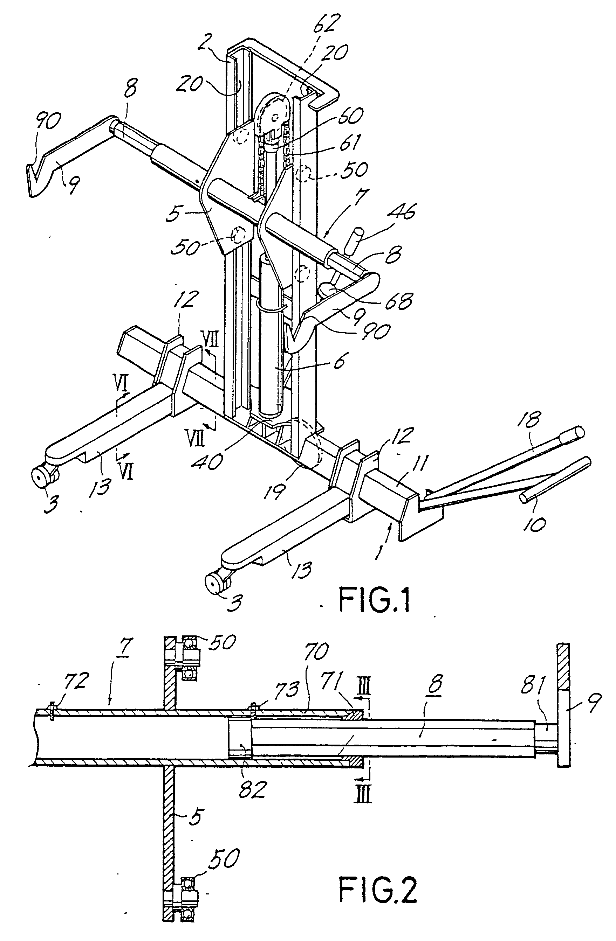

The present applicant has already proposed a carrier of this type which comprises a body 1 having casters 3, 3 at its opposite ends, a course changing main wheel 19provided at the midportion of the body and changeable in its orientation through 90 degrees in a horizontal plane by manipulating a change lever 18, and support arms 9, 9 supported on the body, each having an article support portion and coupled to the piston rod 60 of a hydraulic cylinder device 6 as seen in Fig. 1 (Unexamined Japanese Utility Model Publications SHO 57-165562 and SHO 60-53674).

The support arms 9, 9 of the carrierare movable upward and downward. The support arms 9, 9 can be fixedly positioned at a desired level, or the article supported thereon can be raised or lowered by operating the hydraulic cylinder device 6.

However, the support arms 9, 9 of the conventional carrier are not shiftable with respect to the angle at which they are supported on the carrier body. For example, when a beam placed at a level above the floor in a weaving factory is to be delivered onto the support arms of the carrier and then mounted on the weaving machine, it is likely that the support arms 9 will be positioned upward at an excessively large angle with respect to a horizontal plane. The arms are then unable to receive the beam unless the beam is at a correspondingly high level above the floor. Further if the support arms 9 are mounted on the carrier body as inclined downward, there arises a need to use a lift device of great up-down stroke for receiving the beam when the beam is at a high level above the floor. Accordingly, the support arms 9 of the prior-art carrier are mounted at a specified angle which is generally suited to the work to be performed and are therefore usable only for a limited work area of predetermined level.

The present invention provides a carrier for elongated articles which includes support arms adjustingly positionable at an optimum angle according to the work to be performed.

### Disclosure of the Invention

The carrier of the present invention comprises a lateral bar horizontally connected to the output portion of a lift device, and a withdrawable rod fitted in each end of the lateral bar and retractable into the bar. The withdrawable rod comprises a polygonal rod portion slidably fitted in an engaging portion provided at the above end of the lateral bar, and a small-diameter portion extending from the polygonal rod portion coaxially therewith, which may have a circular cross section and is inscribed in the cross sectional configuration of the rod portion. The withdrawable rod has a support arm projecting from its outer end.

The withdrawable rod is freely rotatable when slidingly moved relative to the lateral bar to position the small-diameter portion at the engaging portion of the lateral bar.

After the angle of the support arm has been adjusted by rotating the withdrawable rod in this state, the rod is slidingly moved again to fit the polygonal rod portion to the engaging portion of the lateral bar. Consequently, the withdrawable rod is held engaged with the lateral bar, holding the support arm in the adjusted position.

The withdrawable rod can be held in a pluarlity of positions about the axis of the lateral bar where the polygonal rod portion is engageable with the engaging portion of the bar, so that the withdrawable rod is adjustingly positionable at an optimum angle with the lateral bar according to the work to be performed. The support arm is easily adjustable since the withdrawable rod is merely fitted in the lateral bar to provide simple adjusting means.

### Brief Description of the Drawings

Fig. 1 is a perspective view showing a carrier for elongated articles;

Fig. 2 is a sectional view showing a withdrawable rod as fitted in a lateral bar;

Fig. 3 is a view in section taken along the line III-III in Fig. 2;

Fig. 4 is a diagram showing a support arm which is positionable at different angles;

Fig. 5 is a perspective view of a connector;

Fig. 6 is a view in section taken along the line VI-VI in Fig. 1;

Fig. 7 is a view in section taken along the line VII-VII in Fig. 1;

Fig. 8 is a perspective view showing the carrier as disassembled and packaged;

Fig. 9 is a front view of a hydraulic pump;

Fig. 10 is an exploded perspective view of the hydraulic pump;

Fig. 11 is a perspective view of an oil release handle;

Fig. 12 is a front view showing the oil release handle as attached in place; and

Fig. 13 is a sectionalview showing a caster as mounted in position.

### Best Mode of Carrying out the Invention

With reference to Fig. 1, a carrier body 1 has a push handle 10 and is movable forward toward the front and also laterally perpendicular to the forward direction. An upright gate frame 2 having vertical guide grooves 20, 20 is mounted on the body 1. A lift frame 5 is mounted on the frame 2.

The carrier frame 1 comprises a lateral member 11 and horizontal foot members 13, 13 attached to opposite side portions of the lateral member 11 at right angles thereto by connectors 12, 12.

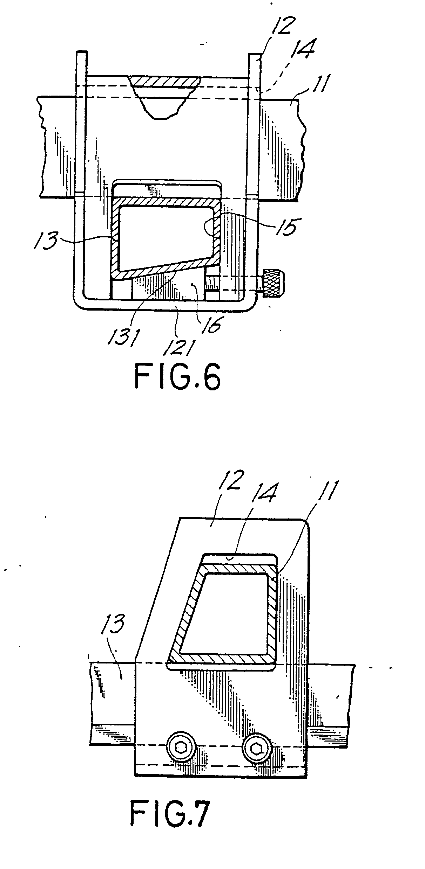

As seen in Figs. 6 and 7, the lateral member 11 and foot members 13, 13 are trapezoidal in cross section. Each connector 12 is formed in its upper portion with a trapezoidal hole 14 for the lateral member 11 to loosely extend therethrough. The connector 12 is also formed in its lower portion with a rectangular hole 14 communicating with the trapezoidal hole 14 and extending at right angles therewith for the foot member 13 to extend therethrough, loosely with respect to the vertical direction.

The two members 11 and 13 are connected together by inserting the lateral member 11 and the foot member 13 respectively through the holes 14, 15 of the connector 12 with the bottom of the member 11 in contact with the top of the foot member 13, and pushing up the foot member 13 by a wedge 16 inserted between the slanting bottom surface 131 of the foot member 13 and a bottom plate 121 of the connector 12 to thereby force the lateral member 11 into biting engagement with the opposed inner edges of the connector 12 defining the trapezoidal hole 14.

The carrier frame 1 can be disassembled by removing the wedge 16 and withdrawing the members 11, 13 from the connector 12.

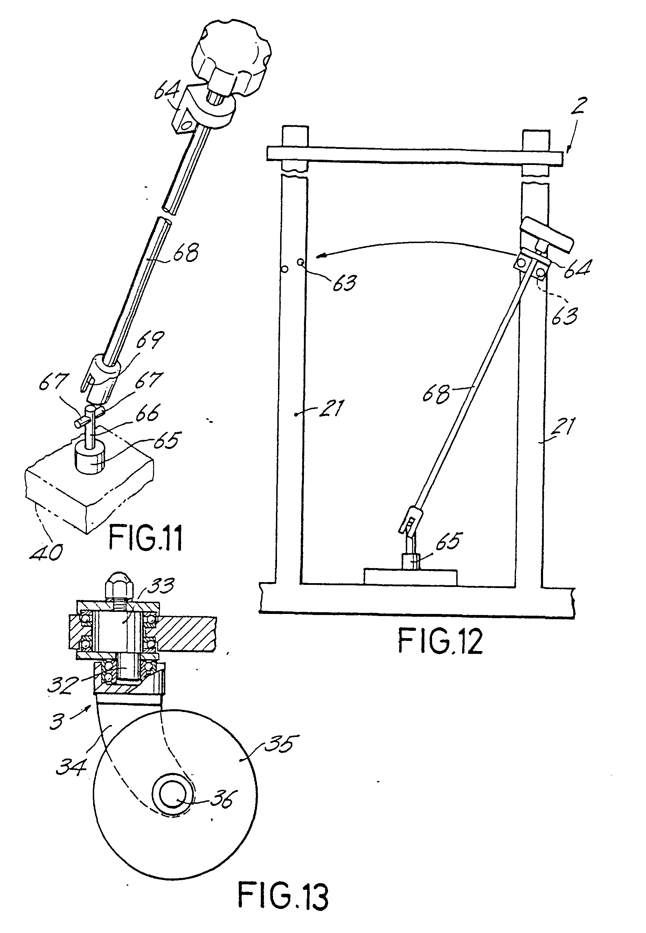

As shown in Fig. 13, a caster 3 is attached to the free end of each foot member 13 by a rotary shaft 33 having an eccentric pin 32.

A frame 34 for supporting the wheel 35 of the caster 3 is rotatably attached to the eccentric pin 32 of the rotary shaft 33, with the result that the cen'ter of rotation of the wheel 35 is made eccentric in two stages with respect to the axis of the rotary shaft 33. This assures a smoother change of course than when conventional casters are used.

The lift frame 5 has at its opposite sides rollers 50, 50 which are rollably fitted in the vertical, guide grooves 20, 20 of the gate frame 2.

A hydraulic cylinder device 6 and a hand-operated hydraulic pump 4 are mounted on a mount 40 provided on the carrier body 1 centrally thereof. The cylinder device 6 has a piston rod 60 oriented upward and rotatably supporting a sprocket wheel 62 at its upper end.

A hollow cylindrical lateral bar 7 is fixed to the lift frame 5. A chain 61 extends from the lateral bar 7 over the sprocket wheel 62 to the cylinder of the cylinder device 6. The piston rod 60 of the hydraulic cylinder device 6, when extended or retracted, moves the lift frame 5 upward or downward.

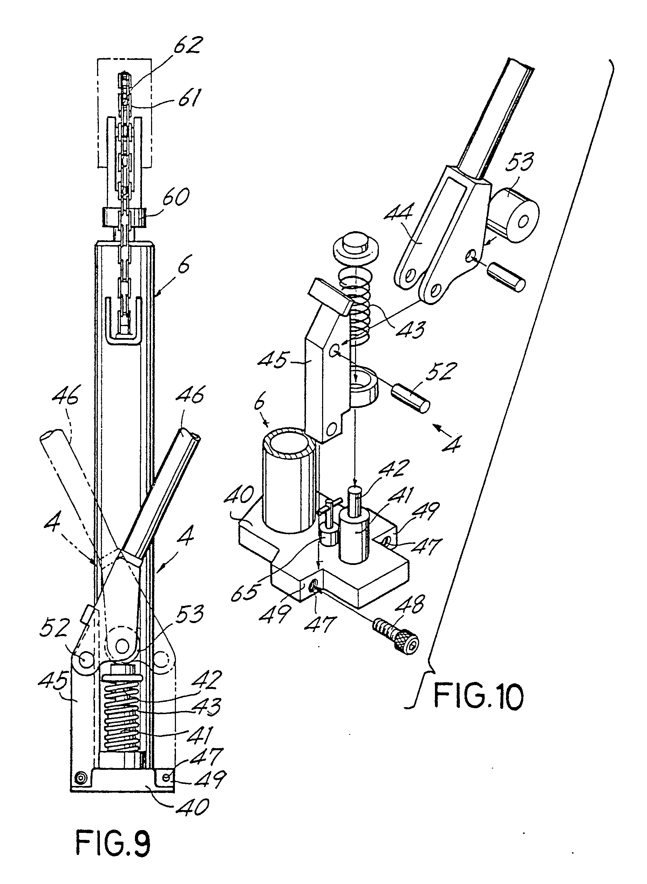

With reference to Fig. 10, a hydraulic pressure relief valve 65 and the hydraulic pump 4 are arranged on the mount 40 behind the cylinder device 6. The mount 40 has in its interior a hydraulic circuit (not shown) communicating with the cylinder device 6, the pressure relief valve 65 and the hydraulic pump 4.

As shown in Fig. 9, the hydraulic pump 4 comprises a pump cylinder 41 provided vertically on the mount 40, a plunger 42 slidably inserted in the cylinder 41 and a spring 43 biasing the plunger 42 upward.

A lever 44 disposed above the plunger 42 for pushing the plunger 42 is attached to the mount 40 by a connecting plate 45. The lower end of the lever 44 is pivoted to the upper end of the connecting plate 45 by a pin 52. A handle 46 is removably joined to the lever 44. The lever 44 carries at its midportion a roller 53 opposed to the plunger 42.

With reference to Fig. 10, the lower end of the connecting plate 45 is fastened by a bolt 48 to an attaching portion 49 integral with the mount 40 and having a threaded bore 47. The mount 40 has two attaching portions 49 at equal distances from the pump cylinder 41 and arranged symmetrically with respect to the cylinder 41.

The connecting plate 45 can be fastened to either of the attaching portions 49 to dispose the lever assembly including the plate 45 at either of the symmetrical positions with respect to the cylinder 41. Thus, as indicated in solid lines and phantom lines in Fig. 9, the handle 46 for operating the hydraulic pump 4 can be selectively oriented in one of two directions for the ease of manipulation.

As shown in Fig. 11, the pressure relief valve 65 has a spindle 66 which is rotatable to open or close an oil release channel (not shown) within the mount 40. The spindle 66 has pins 67, 67 projecting from its upper end at right angles therewith. A handle 68 for rotating the sprindle 66 is formed at its lower end with cutouts 69, 69 for the projecting pins 67 to fit in removably.

The handle 68, which is rotated manually, is rotatably supported at its upper end by a bracket 64 screwed on the gate frame 2. Screw holes 63, 63 for attaching the bracket 64 to the gate frame 2 is formed in each of the vertical posts 21, 21 of the frame, so as to render the handle 68 usable as inclined in a direction in which it can be manipulated easily.

With reference to Fig. 2, the lateral bar 7 on the lift frame 5 comprises a hollow cylindrical portion 70 extending through and secured to the lift frame 5, and engaging portions 71 provided at the respective ends of the cylindrical portions 70 as will be described below.

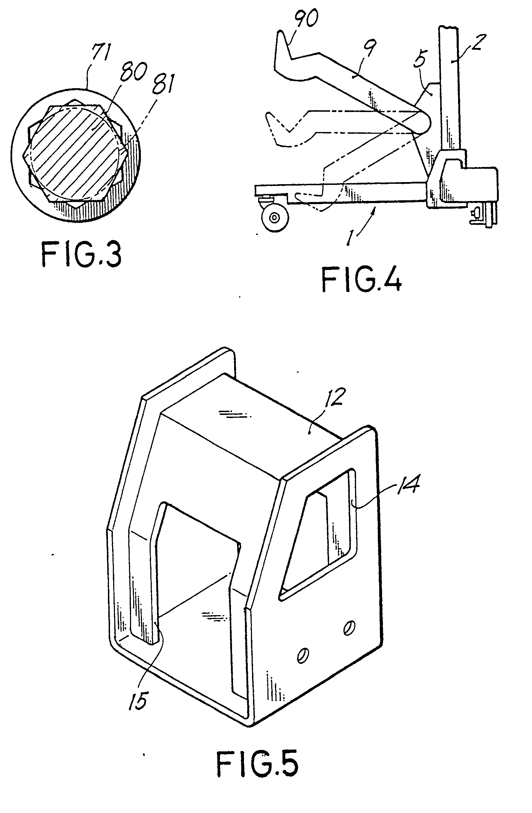

A withdrawable rod 8 having a hexagonal cross section is retractably fitted in each end of the lateral bar 7 and comprises a hexagonal rod portion 80, a disklike retaining piece 82 provided at the inner end of the rod portion and having a larger diameter than a circle circumscribing the hexagonal cross section of the rod portion 80, and a small-diameter portion 81 projecting from the rod portion 80 and providing the outer end of the rod 8. The small-diameter portion 81 has a circular cross section inscribed in the hexagon of the cross section of the rod portion 80 (see Fig. 3).

As shown in Fig. 3, the engaging portion 71 at each end of the lateral bar 7 has a star-shaped opening in which the hexagonal rod portion 80 of the withdrawable rod 8 is intimately fittable at positions arranged at an angular spacing of 30 degrees about the axis of the bar 7.

The hollow cylindrical portion 70 of the lateral bar 7 has a pair of stopper screws 72, 73 located in corresponding relation to the maximum withdrawal position and the maximum retraction position of the withdrawable rod 8, respectively, the stopper screws extending through the wall of the cylindrical portion 70 in screw-thread engagement therewith and projecting into the interior of the portion 70.

Each withdrawable rod 8 is fixedly provided with a support arm 9 projecting from its outer end and having an article support portion 90 at the free end of the arm.

To alter the position of the support arm 9 about the axis of the lateral bar 7, the withdrawable rod 8 is first fully pushed into the bar 7 after loosening the screw 72, whereby the retaining piece 82 is moved past the screw 72, and the small-diameter portion 81 is positioned in the opening of the engaging portion 71, rendering the rod 8 free to rotate.

The support arm 8 is then rotated to the desired one of positions at an angular spacing of 30 degrees about the axis of the lateral bar 7 as shown in Fig. 4, whereupon the rod 8 is withdrawn from the bar 7. Consequently, the hexagonal rod portion 80 of the rod 8 is fitted into the engaging portion 71 of the bar 7, which in turn holds the rod 8 in the desired position against rotation.

The opposite withdrawable rods 8, 8 are withdrawn from the lateral bar 7 by a suitable length, and the screws 72 are then tightened. The distance between the pair of support arms 9, 9 is determined according to the length of the article to be transported.

The hydraulic cylinder device 6 is operated by the handle 46 on the carrier body 1 to project the piston rod 60, whereby the lateral bar 7 is pulled up by the chain 61 to raise the support arms 9. The handle 68 for the pressure relief valve 65, when rotated, lowers the support arms 9.

The carrier is brought to below the article to be transported, and the support arms 9 are raised by operating the hydraulic cylinder device 6 to lift the article with its opposite ends placed on the arms 9.

The carrier described above is universally usable since not only the angle of the support arms 9 is adjustable, but the distance between the pair of arms 9 is also variable according to the length of the article to be transported.

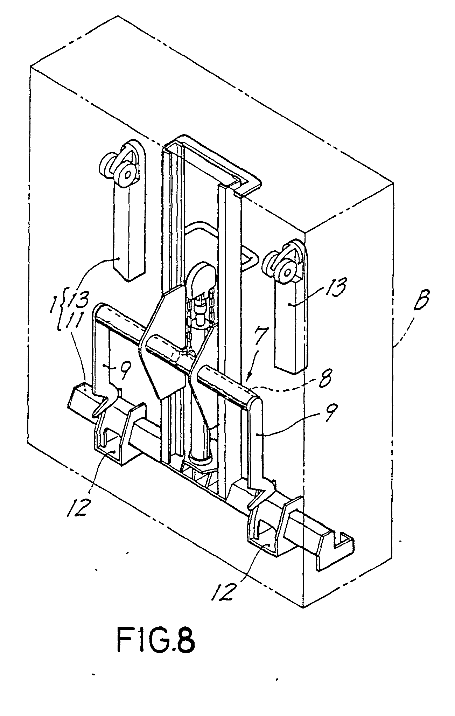

The carrier can be compactly packaged in a flat rectangular parallelepipedal case B by pushing the withdrawable rods 8 into the lateral bar 7, with the support arms directed vertically downward, and disassembling the body 1 in the manner already descirbed, as illustrated in Fig. 8.

## Claims

1. A carrier for elongated articles comprising a carrier body 1 movable forward and laterally, article support arms 9 upwardly and downwardly movably mounted on the carrier body, a lift device mounted on the carrier body 1 and coupled to the article support arms 9 by a lateral bar 7 coupled to the lift device, and a pair of withdrawable rods 8, 8 retractably fitted in the lateral bar 7 and each having the support arm 9 projecting from its outer end, the lateral bar 7 and the pair of withdrawable rods 8 providing means for lifting the article, each withdrawable rod 8 including a rod portion having a polygonal cross section and a small-diameter portion 81 projecting therefrom to provide the rod outer end' the cross section of the small-diameter portion 81 being inscribed in the polygonal cross section of the rod portion, the lateral bar 7 being provided at each end thereof with an engaging portion 71 permitting the sliding movement of the polygonal rod portion but preventing the rotation of the rod portion, the engaging portion 71 further permitting the rotation of the small-diameter portion 81.

2. A carrier as defined in claim 1 wherein the withdrawable rod 8 is provided at its inner end with a slide piece 82 slidable in contact with the inner surface of the lateral bar 7.

3. A carrier as defined in claim 1 wherein the lateral bar 7 has a pair of stopper screws 72, 73 located in corresponding relation to the maximum withdrawal position and the maximum retraction position of the withdrawable rod 8 respectively, the stopper screws extending through the wall of the bar 7 in screw-thread engagement therewith and projecting into the interior of the bar 7.

## Patentansprüche

1. Träger für langgestreckte Gegenstände mit einem Trägergestell (1), das vorwärts und seitlich beweglich ist, Stützarmen (9) für die Gegenstände, die aufwärts und abwärts beweglich am Trägergestell angebracht sind, einer Hubeinrichtung, die an dem Trägergestell (1) montiert ist und mit den Stützarmen (9) über eine quergerichtete Stange (7) verbunden ist, und zwei ausziehbaren Stangen (8), die zurückziehbar in der quergerichteten Stange (7) liegen und bei denen jeweils vom äußeren Ende ein Stützarm (9) vorspringt, wobei die quergerichtete Stange (7) und die beiden ausziehbaren Stangen (8) eine Einrichtung zum Anheben der Gegenstände bilden, jede ausziehbare Stange (8) einen Stangenabschnitt mit polygonalem Querschnitt und einen Abschnitt (81) kleinen Durchmessers, der von ersterem Abschnitt vorspringt und das äußere Stangenende bildet, umfaßt, wobei der Querschnitt des Abschnitts (81) kleinen Durchmessers in den Abschnitt polygonalen Durchmessers des Stangenbereichs einbeschrieben ist, wobei die quergerichtete Stange (7) an jedem Ende mit einem Eingriffsbereich (71) versehen ist, der eine Gleitbewegung des polygonalen Stangenabschnitts gestattet, jedoch eine Drehung verhindert, und wobei der Eingriffsbereich (71) weiterhin die Drehung des Abschnitts kleinen Durchmessers (81) gestattet.

2. Träger nach Anspruch 1, bei dem die ausziehbare Stange (8) an ihrem inneren Ende mit einem Gleitstück (82) versehen ist, das in gleitender Berührung mit der inneren Oberfläche der quergerichteten Stange (7) steht.

3. Träger nach Anspruch 1, bei dem die quergerichtete Stange (7) zwei Anschlagschrauben (72, 73) aufweist, die in entsprechender Beziehung zu der ausgefahrenen Endposition und der eingefahrenen Endposition der ausziehbaren Stangen (8) stehen, welche Anschlagschrauben sich durch die Wand der Stange (7) mit Gewindeeingriff zu dieser erstrecken und in das Innere der Stange (7) hineinragen.

**Revendications**

1. Dispositif de transport pour articles al longés comportant un corps (1) apte à être déplacé vers l'avant et latéralement, des bras (9) de support d'articles montés sur le corps du dispositif de transport de manière à pouvoir se déplacer vers le haut et vers le bas, un dispositif de levage monté sur le corps (1) et relié aux bras (9) de support d'articles par une barre latérale (7) reliée au dispositif de levage, ainsi qu'une paire de tiges retirables (8, 8) insérées de manière rétractable dans la barre latérale (7) et à partir de l'extrémité externe de chacune desquelles s'étend un bras de support (9), la barre latérale (7) et la paire de tiges retirables (8, 8) fournissant des moyens servant à soulever chaque article, chaque tige retirable (8) comprenant une partie de tige présentant une section transversale polygonale et une partie (81) de faible diamètre s'étendant à partir de ladite partie de tige et constituant ainsi l'extrémité externe de la tige, la section transversale de la partie (81) de faible diamètre s'inscrivant dans la section transversale polygonale de la partie de tige, la barre atérale (7) étant munie à chacune de ses extrémités d'une Partie d'engagement (71) permettant le déplacement par coulissement de la partie de tige polygonale mais empêchant la rotation de cette dernière, la partie d'engagement (71) permettant en outre la rotation de la partie (81) de faible diamètre.

2. Dispositif de transport tel que défini dans la revendication 1, dans lequel la tige retirable (8) est munie, à son extrémité interne, d'un élément coulissant (82) apte à coulisser en contact avec la surface interne de la barre latérale (7).

3. Dispositif de transport tel que défini dans la revendication 1, dans lequel la barre latérale (7) comporte une paire de vts' d'arrêt (72, 73) disposées de manière à correspondre à la positton de retrait maximal et à la position de d'escamotage maximal de la tige retirable (8) respectivement, les vis d'arrêt s'étendant à travers la paroi de la barre (7), en s'engageant par vissage avec celle-ci, et faisant saillie dans l'intérieur de la barre (7).

# FIG.1

# FIG.2

FIG.3

FIG.4

FIG.5

FIG.6

FIG.7

# FIG.8

FIG.9

FIG.10

FIG.11

FIG.12

FIG.13